# EUROPÄISCHE PATENTSCHRIFT

(11) **EP 3 488 200 B1**
(45) Veröffentlichungstag und Bekanntmachung des Hinweises auf die Patenterteilung: **08.09.2021**
(21) Anmeldenummer: 17742690.5
(22) Anmeldetag: 12.07.2017
(51) Int. Cl.: G01F 23/38, G01F 23/46, G01F 23/62

(54) **FÜLLSTANDSGEBER**
LEVEL SENSOR
CAPTEUR DE NIVEAU

(30) Priorität: 22.07.2016 DE 102016213502
(43) Veröffentlichungstag der Anmeldung: 29.05.2019
(73) Patentinhaber: Vitesco Technologies GmbH, 30165 Hannover (DE)
(72) Erfinder: BENNER, Hans-Guenter, 65830 Kriftel (DE); PAUER, Bernd, 65817 Eppstein (DE)
(86) Internationale Anmeldenummer: PCT/EP2017/067477
(87) Internationale Veröffentlichungsnummer: WO 2018/015230

(56) Entgegenhaltungen:
- WO-A1-2015/185265
- WO-A1-2015/185270
- DE-A1- 19 701 246
- DE-A1- 19 819 047
- DE-A1-102004 039 853
- DE-A1-102005 047 542
- DE-A1-102007 061 316
- US-A1- 2015 096 367

## Beschreibung

### Technisches Gebiet

Die Erfindung betrifft einen Füllstandsgeber für die Bestimmung eines Füllstandes in einem Tank, mit einem auf einem Trägersubstrat angeordneten Widerstandsnetzwerk, mit einem Kontaktelement und mit einem magnetischen Element, wobei das Kontaktelement benachbart zu dem Widerstandsnetzwerk angeordnet ist und das magnetische Element relativ zum Widerstandsnetzwerk und dem Kontaktelement bewegbar ist, wobei das Kontaktelement einen Kontaktbereich aufweist, welcher durch das magnetische Element auslenkbar ist, wobei eine elektrisch leitfähige Verbindung zwischen dem Kontaktbereich und dem Widerstandsnetzwerk durch die Auslenkung des Kontaktbereichs herstellbar ist.

### Stand der Technik

Füllstandsgeber zur Ermittlung des Füllstands in einem Kraftstofftank weisen ein Widerstandsnetzwerk auf, welches abhängig von dem tatsächlichen Füllstand ein Signal erzeugt, welches dem Füllstand im Kraftstofftank entspricht. Hierzu wird regelmäßig ein Schwimmer vorgesehen, der auf der Oberfläche des Kraftstoffs im Kraftstofftank schwimmt und mittels eines Gestänges und einem Schleifkontakt auf das Widerstandsnetzwerk einwirkt. Die Bewegung des Schwimmers infolge eines steigenden oder sinkenden Füllstandes wird über das Gestänge an den Schleifkontakt übertragen, der infolge der Bewegung an dem Widerstandsnetzwerk vorbeigeführt wird. Abhängig von der Position des Schleifkontakts wird hierbei ein unterschiedliches Signal erzeugt. Durch eine Normierung des Signals und einer spezifischen Gestaltung des Widerstandsnetzwerks kann aus dem an dem Widerstandsnetzwerk erzeugten Signal direkt auf den Füllstand im Kraftstofftank geschlossen werden. Solche Füllstandgeber sind in vielfältiger Weise im Stand der Technik bekannt.

Die Druckschrift DE 10 2005 047 542 A1 offenbart einen Füllstandssensor für einen Füllstandsgeber bestehend aus einem Substrat auf dem ein Widerstandsnetzwerk und eine dem Widerstandsnetzwerk zugeordnete Kontaktstruktur angeordnet ist, einem das Widerstandsnetzwerk und die Kontaktstruktur verschließenden Deckel und einem Permanentmagneten zum Betätigen der Kontaktstruktur. Dabei erzeugt die elektrische Verbindung der Kontaktstruktur mit dem Widerstandsnetzwerk ein elektrisches Signal für den Füllstand.

Die Druckschrift WO 2015/185265 A1 offenbart einen Füllstandssensor zum Detektieren eines Füllstandes in einem Behälter. Der Füllstandssensor weist einen Abstandshalter aus einem ferromagnetischen Material auf. Aufgrund der Magnetisierbarkeit des Abstandshalters kann dieser, insbesondere mit einer Kontaktfederanordnung des Füllstandsensors, mithilfe eines magnetischen Werkzeugs gehandhabt werden.

Darüber hinaus sind Füllstandsgeber bekannt, die anstelle eines Schleifkontakts ein Kontaktelement aufweisen, welches eine Mehrzahl von fingerartigen Abschnitten aufweist, die durch eine Magnetkraft derart ausgelenkt werden können, dass ein elektrischer Kontakt zwischen dem fingerartigem Abschnitt und einem Widerstandsnetzwerk erzeugt wird. Durch das Erzeugen des elektrischen Kontakts wird ein Signal erzeugt. Abhängig von der Ausgestaltung des Widerstandsnetzwerks und des Kontaktelementes kann durch das erzeugte Signal direkt auf den Füllstand im Kraftstofftank geschlossen werden. Ein solcher Füllstandsgeber ist beispielsweise durch die DE 197 01 246 A1 bekannt.

Nachteilig an den Vorrichtungen im Stand der Technik ist insbesondere, dass der Schleifkontakt an dem Widerstandsnetzwerk eine mechanische Kontaktierung darstellt, die einem unvermeidbaren Verschleiß unterliegt. Außerdem sind der Schleifkontakt und das Widerstandsnetzwerk hierbei vollständig im Kraftstoff innerhalb des Kraftstofftanks angeordnet, wodurch es zu schädigenden Einwirkungen durch den Kraftstoff kommen kann. Die Erzeugung des elektrischen Kontakts durch ein Kontaktelement mit einer Mehrzahl von fingerartigen Abschnitten, die durch einen Magneten ausgelenkt werden können, ist nachteilig, da das Kontaktelement sehr empfindlich gegenüber mechanischen Störeinflüssen ist, was insbesondere die Montage und den Transport der Kontaktelemente erschwert.

### Darstellung der Erfindung, Aufgabe, Lösung, Vorteile

Daher ist es die Aufgabe der vorliegenden Erfindung einen Füllstandsgeber zu schaffen, welcher ein mechanisch widerstandsfähigeres Kontaktelement aufweist und gleichzeitig eine verschleißfreie Erzeugung eines von dem Füllstand im Kraftstofftank abhängigen und möglichst genauen Signals ermöglicht.

Die Aufgabe hinsichtlich des Füllstandsgebers wird durch einen Füllstandsgeber mit den Merkmalen von Anspruch 1 gelöst.

Ein Ausführungsbeispiel der Erfindung betrifft ein Füllstandsgeber für die Bestimmung eines Füllstandes in einem Tank, mit einem auf einem Trägersubstrat angeordneten Widerstandsnetzwerk, mit einem Kontaktelement und mit einem magnetischen Element, wobei das Kontaktelement benachbart zu dem Widerstandsnetzwerk angeordnet ist und das magnetische Element relativ zum Widerstandsnetzwerk und dem Kontaktelement bewegbar ist, wobei das Kontaktelement einen Kontaktbereich aufweist, welcher durch das magnetische Element auslenkbar ist, wobei eine elektrisch leitfähige Verbindung zwischen dem Kontaktbereich und dem Widerstandsnetzwerk durch die Auslenkung des Kontaktbereichs herstellbar ist, wobei das Kontaktelement neben dem Kontaktbereich einen Anbindungsbereich aufweist und einteilig ausgebildet ist. Der Anbindungsbereich des Kontaktelements ist direkt mit dem Trägersubstrat verbunden und der Kontaktbereich des Kontaktelements ist beabstandet zum Widerstandsnetzwerk und dem Trägersubstrat ausgebildet. Ferner ist der Kontaktbereich und der Anbindungsbereich stufenförmig zueinander versetzt angeordnet.

Das Kontaktelement ist derart ausgebildet, dass sowohl die Anbindung an das Trägersubstrat als auch die Beabstandung des Kontaktbereichs zum Widerstandsnetzwerk mit einem einzigen Bauteil möglich ist. Insbesondere die Einsparung eines Distanzelementes zur Beabstandung des Kontaktbereichs von dem Widerstandsnetzwerk ist vorteilhaft, da ein Montageschritt eingespart werden kann und die Komplexität des Systems reduziert wird.

Die einteilige Ausführung des Kontaktelements ist ferner vorteilhaft, da hierdurch keine Vormontage nötig ist und insgesamt eine vereinfachte Montage des Füllstandsgebers möglich ist.

Auch ist es vorteilhaft, wenn das Kontaktelement aus einem metallischen Werkstoff gebildet ist. Ein metallischer Werkstoff ist besonders vorteilhaft, da einerseits die elektrische Leitfähigkeit des Kontaktbereichs bereits durch das verwendete Material gegeben ist und weiterhin ein metallisches Material regelmäßig eine hohe Resistenz gegenüber den korrosiven Einflüssen des Kraftstoffs aufweist. Dies ist insbesondere vorteilhaft, da zusätzliche Maßnahmen zur Abdichtung des Gehäuses des Füllstandsgebers überflüssig werden, da der innere Aufbau ausreichend resistent gegenüber den korrosiven Einflüssen des Kraftstoffs ist und so eine ausreichende Dauerhaltbarkeit auch ohne ein vollständig luftdichtes Gehäuse erreicht werden kann.

Durch eine stufenförmige Gestaltung wird sichergestellt, dass der Kontaktbereich ausreichend weit von dem Widerstandsnetzwerk beabstandet wird, um das ungewollte Entstehen eines elektrischen Kontakts zwischen dem Widerstandsnetzwerk und dem Kontaktbereich zu verhindern. Bevorzugt sind sowohl der Anbindungsbereich als auch der Kontaktbereich plan ausgebildet, so dass eine Anbindung an das Trägersubstrat möglich ist, ohne dabei Spannungen in dem Kontaktelement zu erzeugen. Weiterhin ist durch die plane Gestaltung sichergestellt, dass der Kontaktbereich parallel zum Widerstandsnetzwerk ausgerichtet ist und damit über seine gesamte räumliche Erstreckung äquidistant zum Widerstandsnetzwerk angeordnet ist.

Auch ist es zu bevorzugen, wenn das Kontaktelement durch das Tiefziehen einer plattenförmigen Platine erzeugt ist. Dies ist vorteilhaft, da das Tiefziehen weithin bekannt ist und eine Vielzahl unterschiedlicher Materialien zur Herstellung des Kontaktelementes herangezogen werden können. Auch ist es möglich auf einfache Weise eine Vielzahl von unterschiedlichen Formgebungen zu realisieren.

Darüber hinaus ist es vorteilhaft, wenn der Kontaktbereich als kreisbogenförmiger Bandabschnitt ausgebildet ist, welcher parallel versetzt zum Widerstandsnetzwerk ausgerichtet ist. Eine kreisbogenförmige Ausbildung ist besonders vorteilhaft, da das Magnetelement bevorzugt mittels eines um einen fixen Drehpunkt verdrehbaren Bügels geführt wird, wodurch eine kreisbogenförmige Bahnkurve für die Bewegung des Magnetelementes definiert wird. Bevorzugt ist der kreisbogenförmige Bandabschnitt des Kontaktelementes derart ausgebildet, dass er mit der kreisbogenförmigen Bahnkurve des Magnetelementes korrespondiert. Dadurch wird sichergestellt, dass der Kontaktbereich durch die bis auf Alterungseinflüsse unveränderliche Magnetkraft des Magnetelementes über den gesamten Erstreckungsbereich gleichmäßig angezogen beziehungsweise ausgelenkt wird.

Weiterhin ist es vorteilhaft, wenn der Kontaktbereich entlang einer Auslenkungsrichtung hin zum Widerstandsnetzwerk auslenkbar ist, wobei abhängig von der Position des Magnetelementes auf der dem Kontaktelement abgewandten Seite des Widerstandsnetzwerks jeweils nur ein Teilbereich des Kontaktbereiches ausgelenkt und hin zum Widerstandsnetzwerk bewegt wird. Der bandförmige Kontaktbereich wird jeweils nur teilweise ausgelenkt, so dass immer nur ein begrenzter Abschnitt mit dem Widerstandsnetzwerk in Kontakt gerät. Dies ist notwendig, um eine genaue Aussage über den Füllstand im Tank machen zu können. Das Widerstandsnetzwerk ist derart ausgebildet, dass abhängig von der Position des Magnetelementes und damit der Position des erzeugten elektrischen Kontaktes ein spezifisches elektrisches Signal erzeugt wird. Würde stattdessen der gesamte Kontaktbereich gleichzeitig mit dem Widerstandsnetzwerk in elektrisch leitenden Kontakt gebracht werden, würde eine exakte Aussage über den Füllstand nicht mehr möglich sein.

Auch ist es zweckmäßig, wenn der Kontaktbereich folienförmig ausgestaltet ist, wobei die Materialstärke entlang der Hauptauslenkungsrichtung sehr klein im Vergleich zur räumlichen Erstreckung des Kontaktbereiches in die übrigen Raumrichtungen ist. Die folienförmige Ausgestaltung ist insbesondere durch eine sehr geringe Materialstärke entlang der Hauptauslenkungsrichtung, also von dem Kontaktbereich hin zum Widerstandsnetzwerk, gekennzeichnet. Dies führt dazu, dass der Kontaktbereich auch infolge von nur geringen Magnetkräften ausgelenkt werden kann. Gleichzeitig muss der Kontaktbereich derart stabil ausgelegt sein, dass keine Kontaktierung des Widerstandsnetzwerks infolge von Erschütterungen und anderen Bewegungen erzeugt wird, was zur Entstehung von Fehlsignalen führen kann.

Der Kontaktbereiche kann vorteilhafterweise Strukturen aufweisen, die eine Segmentierung des Kontaktbereichs erzeugen. Dies können beispielsweise Ausnehmungen, Verjüngungen oder Einkerbungen sein. Dadurch kann erreicht werden, dass abhängig von der Position des Magnetelementes jeweils nur ein definiertes Segment des Kontaktbereichs ausgelenkt wird. In einer vorteilhaften Gestaltung können die einzelnen Segmente des Kontaktbereichs auch unabhängig von den jeweils benachbarten Segmenten beweglich sein, beispielsweise durch kragarmförmige Elemente, die benachbart zueinander angeordnet sind.

Darüber hinaus ist es vorteilhaft, wenn der Kontaktbereich durch einen abschnittsweisen Materialabtrag an dem Kontaktelement gebildet ist, wobei durch den Materialabtrag eine im Vergleich zum Anbindungsbereich reduzierte Materialstärke am Kontaktbereich erzeugt ist. Der Kontaktbereich kann auch durch eine spanendes Verfahren erzeugt werden, indem beispielsweise ein Materialabtrag mittels Fräsen durchgeführt wird. Ausgehend von einer Ausgangsmaterialstärke, die beispielsweise im Bereich des Anbindungsbereichs erhalten bleibt, kann der Kontaktbereich verdünnt werden, um eine ausreichende Flexibilität zu erzeugen, während gleichzeitig ein definierter Abstand zwischen dem Widerstandsnetzwerk und dem Kontaktbereich erzeugt wird.

Vorteilhafte Weiterbildungen der vorliegenden Erfindung sind in den Unteransprüchen und in der nachfolgenden Figurenbeschreibung beschrieben.

### Kurze Beschreibung der Zeichnungen

Im Folgenden wird die Erfindung anhand von einem Ausführungsbeispiel unter Bezugnahme auf die Zeichnung detailliert erläutert. In der Zeichnung zeigt:

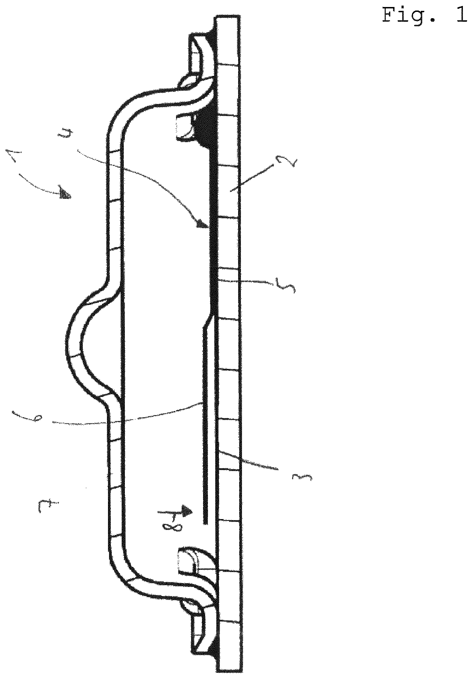

- Fig. 1: eine Schnittansicht durch einen Füllstandsgeber, wobei der Füllstandsgeber ein aus einem Trägersubstrat und einem Gehäusedeckel gebildeten Gehäuse aufweist, in welchem ein Widerstandsnetzwerk und ein Kontaktelement angeordnet sind.

### Bevorzugte Ausführung der Erfindung

Die Figur 1 zeigt eine Schnittansicht durch einen Füllstandsgeber 1, welcher ein Gehäuse aufweist das aus einem Gehäusedeckel 7 und einem Trägersubstrat 2 gebildet ist. Innerhalb des Gehäuses des Füllstandsgebers 1 ist ein Kontaktelement 4 angeordnet, welches einen Kontaktbereich 6 und einen Anbindungsbereich 5 aufweist. Das Kontaktelement 4 ist einteilig ausgebildet, so dass der Kontaktbereich 6 von dem Widerstandsnetzwerk 3 beanstandet angeordnet ist. Diese Beanstandung ist im Ausführungsbeispiel der Figur 1 dadurch erreicht das der Kontaktbereich 6 stufenförmig von dem Anbindungsbereich 4 abgesetzt ist.

Das Kontaktelement 4 ist im Anbindungsbereich 5 mit dem Trägersubstrat 2 verbunden. Unterhalb des Trägersubstrats 2 kann das Magnetelement, welches in Figur 1 nicht dargestellt ist, im Bereich des Kontaktbereichs 6 bewegt werden. Dadurch kann eine Magnetkraft auf den metallischen und magnetischen Kontaktbereich 6 einwirken, wodurch dieser hin zum Widerstandsnetzwerk 3 ausgelenkt wird. Die Auslenkung des Kontaktbereichs 6 erfolgt entlang der Hauptauslenkungsrichtung 8 hin zum Widerstandsnetzwerk 3. Sobald ein elektrisch leitfähiger Kontakt zwischen dem Kontaktbereich 6 und dem Widerstandsnetzwerk 3 erzeugt ist wird ein spezifisches elektrisches Signal erzeugt, welches abhängig von der Position des Magnetelementes unterhalb des Trägersubstrats 2 ist. Durch dieses spezifische elektrische Signal ist eine direkte Aussage über den Füllstand innerhalb des Tanks möglich.

Das Ausführungsbeispiel der Figur 1 weist insbesondere keinen beschränkenden Charakter auf und dient der Verdeutlichung des Erfindungsgedankens. Die Darstellung der Figur 1 ist beispielhaft und schließt alternative Lösungsformen nicht aus. Insbesondere eine abweichende Gestaltung des Trägersubstrats 2 oder des Gehäusedeckels 7 ist möglich.

## Patentansprüche

1. Füllstandsgeber (1) für die Bestimmung eines Füllstandes in einem Tank, mit einem auf einem Trägersubstrat (2) angeordneten Widerstandsnetzwerk (3), mit einem Kontaktelement (4) und mit einem magnetischen Element, wobei das Kontaktelement (4) benachbart zu dem Widerstandsnetzwerk (3) angeordnet ist und das magnetische Element relativ zum Widerstandsnetzwerk (3) und dem Kontaktelement (4) bewegbar ist, wobei das Kontaktelement (4) einen Kontaktbereich (6) aufweist und das magnetische Element im Bereich des Kontaktbereichs (6) bewegbar ist, sodass der Kontaktbereich (6) durch das magnetische Element auslenkbar ist, wobei eine elektrisch leitfähige Verbindung zwischen dem Kontaktbereich (6) und dem Widerstandsnetzwerk (3) durch die Auslenkung des Kontaktbereichs (6) herstellbar ist, wobei das Kontaktelement (4) neben dem Kontaktbereich (6) einen Anbindungsbereich (5) aufweist, **dadurch gekennzeichnet, dass** das Kontaktelement (4) einteilig ausgebildet ist, dass der Anbindungsbereich (5) direkt mit dem Trägersubstrat (2) verbunden ist, dass der Kontaktbereich (6) beabstandet zum Widerstandsnetzwerk (3) und dem Trägersubstrat (2) ausgebildet ist und dass der Kontaktbereich (6) und der Anbindungsbereich (5) stufenförmig zueinander versetzt angeordnet sind.

2. Füllstandsgeber (1) nach Anspruch 1, **dadurch gekennzeichnet, dass** das Kontaktelement (4) aus einem metallischen Werkstoff gebildet ist.

3. Füllstandsgeber (1) nach einem der vorhergehenden Ansprüche, **dadurch gekennzeichnet, dass** das Kontaktelement (4) durch das Tiefziehen einer plattenförmigen Platine erzeugt ist.

4. Füllstandsgeber (1) nach einem der vorhergehenden Ansprüche, **dadurch gekennzeichnet, dass** der Kontaktbereich (6) als kreisbogenförmiger Bandabschnitt ausgebildet ist, welcher parallel versetzt zum Widerstandsnetzwerk (3) ausgerichtet ist.

5. Füllstandsgeber (1) nach einem der vorhergehenden Ansprüche, **dadurch gekennzeichnet, dass** der Kontaktbereich (6) entlang einer Auslenkungsrichtung hin zum Widerstandsnetzwerk (3) auslenkbar ist, wobei abhängig von der Position des Magnetelementes auf der dem Kontaktelement (4) abgewandten Seite des Widerstandsnetzwerks (3) jeweils nur ein Teilbereich des Kontaktbereiches (6) ausgelenkt und hin zum Widerstandsnetzwerk (3) ausgelenkt wird.

6. Füllstandsgeber (1) nach einem der vorhergehenden Ansprüche, **dadurch gekennzeichnet, dass** der Kontaktbereich (6) folienförmig ausgestaltet ist, wobei die Materialstärke entlang der Hauptauslenkungsrichtung (8) sehr klein im Vergleich zur räumlichen Erstreckung des Kontaktbereiches (6) in die übrigen Raumrichtungen ist.

7. Füllstandsgeber (1) nach einem der vorhergehenden Ansprüche, **dadurch gekennzeichnet, dass** der Kontaktbereich (6) durch einen abschnittsweisen Materialabtrag an dem Kontaktelement (4) gebildet ist, wobei durch den Materialabtrag eine im Vergleich zum Anbindungsbereich (5) reduzierte Materialstärke am Kontaktbereich (6) erzeugt ist.

## Claims

1. Filling level indicator (1) for determining a filling level in a tank, having a resistor network (3) which is arranged on a carrier substrate (2), having a contact element (4), and having a magnetic element, wherein the contact element (4) is arranged adjacent to the resistor network (3) and the magnetic element is movable relative to the resistor network (3) and the contact element (4), wherein the contact element (4) has a contact region (6) and the magnetic element is movable in the region of the contact region (6) such that the contact region (6) can be deflected by the magnetic element, wherein an electrically conductive connection between the contact region (6) and the resistor network (3) can be produced by means of the deflection of the contact region (6), wherein the contact element (4) has an attachment region (5) adjacent to the contact region (6), **characterized in that** the contact element (4) is formed in one piece, **in that** the attachment region (5) is connected directly to the carrier substrate (2), **in that** the contact region (6) is formed spaced apart from the resistor network (3) and the carrier substrate (2), and **in that** the contact region (6) and the attachment region (5) are arranged so as to be offset with respect to one another in a stepped manner.

2. Filling level indicator (1) according to Claim 1, **characterized in that** the contact element (4) is formed from a metallic material.

3. Filling level indicator (1) according to either of the preceding claims, **characterized in that** the contact element (4) is produced by the deep-drawing of a plate-like blank.

4. Filling level indicator (1) according to any of the preceding claims, **characterized in that** the contact region (6) is formed as a circular-arc-shaped band portion which is oriented so as to be parallel and offset with respect to the resistor network (3).

5. Filling level indicator (1) according to any of the preceding claims, **characterized in that** the contact region (6) is deflectable along a deflection direction towards the resistor network (3), wherein, in a manner dependent on the position of the magnet element on that side of the resistor network (3) which is averted from the contact element (4), in each case only a partial region of the contact region (6) is deflected and deflected towards the resistor network (3).

6. Filling level indicator (1) according to any of the preceding claims, **characterized in that** the contact region (6) is of foil-like form, wherein the material thickness along the main deflection direction (8) is very small in relation to the spatial extent of the contact region (6) in the other spatial directions.

7. Filling level indicator (1) according to any of the preceding claims, **characterized in that** the contact region (6) is formed by removal of material of the contact element (4) in portions, wherein, as a result of the material removal, a material thickness is produced at the contact region (6) which is reduced in relation to that in the attachment region (5) .

## Revendications

1. Capteur de niveau de remplissage (1) destiné à déterminer un niveau de remplissage dans un réservoir, ledit capteur comprenant un réseau de résistances (3) disposé sur un substrat porteur (2), un élément de contact (4) et un élément magnétique, l'élément de contact (4) étant disposé de manière adjacente au réseau de résistances (3) et l'élément magnétique étant mobile par rapport au réseau de résistances (3) et à l'élément de contact (4), l'élément de contact (4) comportant une zone de contact (6) et l'élément magnétique étant mobile dans la région de la zone de contact (6) de sorte que la zone de contact (6) puisse être déviée par l'élément magnétique, une liaison électriquement conductrice entre la zone de contact (6) et le réseau de résistances (3) pouvant être établie par déviation de la zone de contact (6), l'élément de contact (4) comportant une zone de liaison (5) à côté de la zone de contact (6), **caractérisé en ce que** l'élément de contact (4) est conçu d'une seule pièce, **en ce que** la zone de liaison (5) est reliée directement au substrat porteur (2), **en ce que** la zone de contact (6) est formée à distance du réseau de résistances (3) et du substrat porteur (2) et **en ce que** la zone de contact (6) et la zone de liaison (5) sont disposées de manière décalée l'une de l'autre en forme de gradin.

2. Capteur de niveau de remplissage (1) selon la revendication 1, **caractérisé en ce que** l'élément de contact (4) est formé à partir d'un matériau métallique.

3. Capteur de niveau de remplissage (1) selon l'une des revendications précédentes, **caractérisé en ce que** l'élément de contact (4) est réalisé par emboutissage profond d'un flan en forme de plaque.

4. Capteur de niveau de remplissage (1) selon l'une des revendications précédentes, **caractérisé en ce que** la zone de contact (6) est réalisée sous la forme d'une portion de bande en forme d'arc de cercle qui est orientée de manière décalée parallèlement au réseau de résistances (3).

5. Capteur de niveau de remplissage (1) selon l'une des revendications précédentes, **caractérisé en ce que** la zone de contact (6) peut être déviée vers le réseau de résistances (3) suivant une direction de déviation, seule une partie de la zone de contact (6) étant déviée en fonction de la position de l'élément magnétique du côté du réseau de résistances (3) qui est opposé à l'élément de contact (4) et étant déviée vers le réseau de résistances (3).

6. Capteur de niveau de remplissage (1) selon l'une des revendications précédentes, **caractérisé en ce que** la zone de contact (6) est réalisée sous la forme d'un film, l'épaisseur de matériau dans la direction de déviation principale (8) étant très petite par rapport à l'extension spatiale de la zone de contact (6) dans les autres directions spatiales.

7. Capteur de niveau de remplissage (1) selon l'une des revendications précédentes, **caractérisé en ce que** la zone de contact (6) est formée par enlèvement de matériau par portions sur l'élément de contact (4), l'enlèvement de matériau générant au niveau de la zone de contact (6) une épaisseur de matériau réduite par rapport à la zone de liaison (5).
